# EUROPÄISCHE PATENTANMELDUNG

(11) **EP 3 205 953 A1**
(43) Veröffentlichungstag der Anmeldung: **16.08.2017**
(21) Anmeldenummer: 17155503.0
(22) Anmeldetag: 09.02.2017
(51) Int. Cl.: F24J 2/52

(54) **MONTAGEANORDNUNG FÜR PLATTENFÖRMIGE ELEMENTE UND SOLARANORDNUNG MIT EINER SOLCHEN MONTAGEANORDNUNG**

(30) Priorität: 15.02.2016 CH 1982016
(71) Anmelder: Solarmaterial AG, 6020 Emmenbrücke (CH)
(72) Erfinder: Fischer, Patrik, 6020 Emmenbrücke (CH)
(74) Vertreter: Schalch, Rainer

(57) **Zusammenfassung**

Eine Montageanordnung für plattenförmige Elemente (12) weist erste Montageteile (1) auf, die in zwei verschiedenen Montagepositionen (A; B) an einer Fläche, insbesondere einer Gebäudefläche befestigbar sind. Vorzugsweise mittels eines Basisteils (20). Je nach Montageposition ergibt sich eine unterschiedliche Neigung des jeweiligen plattenförmigen Elements. Am gegenüberliegenden Ende des plattenförmigen Elements (12) kann ein zweites Montageteil (2) vorgesehen sein. Eine solche Montageanordnung erlaubt eine einfache und zeitsparende Montage und erleichtert die Lagerhaltung und den Transport, da nur wenige verschiedene Teile benötigt werden.

## Beschreibung

### Gebiet der Erfindung

Die Erfindung betrifft eine Montageanordnung, welche für die gegenüber einer Fläche geneigte Montage eines plattenförmigen Elements auf der Fläche ausgestaltet und bestimmt ist. Ferner betrifft die Erfindung eine Solarenergieanordnung mit mindestens einem plattenförmigen Solarenergieelement oder Photovoltaikelement und einer solchen Montageanordnung.

### Hintergrund

Für die Montage von plattenförmigen Solarenergieelementen an einer Fläche sind Montageanordnungen (Montagevorrichtungen) bekannt. Solche dienen insbesondere zur Montage von Photovoltaikelementen auf im Wesentlichen horizontalen Flächen, insbesondere Gebäudeflächen, und an Fassaden. Je nach Ausrichtung gegen Süden oder gegen Osten bzw. Westen oder dazwischen liegenden Richtungen werden verschiedene Neigungen der Elemente gegenüber einer horizontalen Gebäudefläche gewählt. In der der Schweiz ist typischerweise eine Neigung von 10° oder eine Neigung von 15° vorgesehen. Die einzelnen Solarenergieelemente können ferner in verschiedener Anordnung zueinander auf der Fläche, insbesondere auf der Gebäudefläche, angeordnet werden. Durch die Vielzahl der Montagepositionen ergibt sich eine aufwändige Montage mit vielen verschiedenen Montageteilen.

### Darstellung der Erfindung

Der Erfindung liegt die Aufgabe zu Grunde, eine Montageanordnung für plattenförmige Elemente, insbesondere Solarenergieelemente und Photovoltaikelemente, zu schaffen, die eine einfache und zeitsparende Montage erlaubt, wobei die unterschiedlichen Anforderungen für die Anordnung der Solarelemente auf einfache Weise erfüllt werden können.

Diese Aufgabe wird mit einer Montageanordnung mit den kennzeichnenden Merkmalen des Anspruchs 1 gelöst.

Mit dieser Montageanordnung kann, je nach Montageposition derselben Montageteile an der Fläche, insbesondere Gebäudefläche, die unterschiedliche Neigung des plattenförmigen Elements bzw. des Solarelements gegenüber der Fläche bewirkt werden. Somit kann die Lagerhaltung von Teilen und deren Bereitstellung und Transport auf die Baustelle vereinfacht werden, da für die Montage des plattenförmigen Elements mit unterschiedlicher Neigung zur Fläche immer dieselben Montageteile verwendet werden können. Im einfachsten Fall können diese Montageteile direkt auf einer im Wesentlichen horizontalen Fläche befestigt werden, indem sie durch Beschweren mit Gewichten auf der Fläche fixiert werden, wie dies bei Solarmontageanordnungen üblich ist und hier als Befestigung im Sinne der vorliegenden Anmeldung verstanden wird. Oder die Befestigung erfolgt mit Dübeln und Schrauben. Das plattenförmige Element wird auf der jeweils oben positionierten Auflagefläche der Montageteile aufgelegt und auf bekannte Weise am Montageteil befestigt. Das andere Ende des plattenförmigen Elements liegt in diesem Fall direkt an der Fläche bzw. Gebäudefläche auf und wird dort befestigt.

Bevorzugt ist indes, dass die Montageanordnung zur direkten Anordnung auf der Fläche bestimmte Basisteile aufweist, und dass die Basisteile und die Montageteile zur werkzeuglosen Befestigung aneinander in beiden Montagepositionen ausgestaltet sind. Auf diese Weise können auch grössere Solaranlagen sehr rasch und einfach montiert werden, indem zunächst die Basisteile in der für die plattenförmigen Elemente richtigen Lage auf der Fläche befestigt werden, insbesondere durch das Beschweren mit Gewichtselementen oder allenfalls mit Dübeln und Schrauben. An diesen Basisteilen werden dann die Montageteile ohne Werkzeug befestigt und dies in der Montageposition, welche die gewünschte Neigung der plattenförmigen Elemente ergibt, was rasch und einfach vor sich gehen kann. Bevorzugt ist dabei eine "Click-Verbindung" der Montageteile an den Basisteilen vorgesehen, was insbesondere dadurch gegeben ist, dass zur werkzeuglosen Befestigung des jeweiligen Montageteils am Basisteil an diesen Teilen jeweils erste starre zusammenwirkende Formschlussmittel vorgesehen sind. Ferner ist jeweils eine Rastverbindung vorgesehen, wobei das jeweilige Montageteil insbesondere eine erste Rastzunge und eine zweite Rastzunge aufweist, wobei je nach Montageposition, zum Beispiel für 10° oder 15° Neigung der plattenförmigen Elemente, was noch erläutert wird, die eine oder die andere Rastzunge zum Einsatz gelangt, und das Basisteil eine einzige, für beide Rastzungen vorgesehene Rastausnehmung aufweist. Damit können die Montageteile einfach zunächst am Basisteil in Formschluss gebracht und nachfolgend am Basisteil eingerastet werden, wobei dies für die beiden verschiedenen Positionen möglich ist.

Weiter ist es bevorzugt, dass die Montageanordnung zweite Montageteile umfasst, welche zur direkten oder indirekten Befestigung an der Fläche bzw. an der Gebäudefläche ausgestaltet und zur Bildung einer Auflage für den auf Grund der Neigung tiefer zu liegen kommenden Endbereich des plattenförmigen Elements bestimmt ist. Damit wird auch für das untere Ende des plattenförmigen Elements eine definierte Auflage geschaffen und es wird von der Fläche beabstandet. Insbesondere können die zweiten Montageteile einen Anschlag für die untere Stirnfläche der Elemente bilden. Es können, je nach Neigung des plattenförmigen Elements, verschiedene zweite Montageteile zum Einsatz kommen. Bevorzugt ist es jedoch, wenn das zweite Montageteil zwei weitere Auflageflächen aufweist, derart, dass diese bei an der Fläche, insbesondere Gebäudefläche, befestigten zweitem Montageteil je einen unterschiedlichen Winkel mit der Fläche bilden, insbesondere jeweils den ersten Winkel (α1) bzw. den zweiten Winkel (α2). Auf diese Weise kann auch das untere Ende des Solarelements neigungsunabhängig mit nur einem Montageteil montiert werden. Damit vereinfacht sich ebenfalls die Lagerhaltung und die Mitnahme bzw. der Transport von Teilen auf die Baustelle. Somit können mit identisch geformten ersten Montageteilen und mit identisch geformten zweiten Montageteilen, also mit nur zwei Montageteiltypen, alle gewünschten Montagepositionen erreicht werden.

Eine weitere bevorzugte Vereinfachung ergibt sich bei einer Montageanordnung mit Basisteilen, bei welcher jeweils ein Basisteil für beide Montageteile vorgesehen ist. Ferner ist bevorzugt, dass die Basisteile und die zweiten Montageteile zur werkzeuglosen Befestigung aneinander ausgestaltet sind. Somit können die Basisteile in der gewünschten Anordnung auf der Fläche bzw. Gebäudefläche vormontiert bzw. befestigt werden, wozu in der Regel Gewichtselemente zur Beschwerung der Basisteile verwendet werden, oder wozu allenfalls Dübel und Schrauben verwendet werden. Da aber noch keine Montageteile von der Fläche bzw. Gebäudefläche weg ragen, ist diese Vormontage einfach und zeitsparend durchzuführen. Nach dieser Vormontage wird kein Werkzeug und werden keine Schrauben zur Anordnung aller erster Montageteile und zweiter Montageteile benötigt und deren Montage an den Basisteilen kann in rascher Folge durchgeführt werden. Es können somit bei der Anordnung der Montageteile an den Basisteile auch keine Schrauben verloren gehen und an schwer zugänglichen Stellen liegen bleiben. Besonders einfach wird die Vormontage, wenn das beiden Montageteilen gemeinsame Basisteil ein langgestrecktes Basisteil ist, das vorgegebene Befestigungspositionen für die Montageteile aufweist, wobei insbesondere die Befestigungspositionen am Basisteil entlang der Längserstreckung symmetrisch zur Quermittelachse des Basisteils angeordnet sind. Damit müssen diejenigen Basisteile, die in einer Reihe an der Gebäudefläche montiert werden, nur richtig zueinander ausgerichtet werden. Damit liegen die Befestigungspositionen für die Montageteile automatisch korrekt auf der Gebäudefläche und eine Fehlerquelle, die sich aus falsch vormontierten Basisteilen ergeben könnte, wird vermieden.

Bevorzugt erfolgt auch die werkzeuglose Befestigung des zweiten Montageteils am Basisteil mittels jeweils ersten starren, zusammenwirkenden Formschlussmitteln sowie jeweils einer Rastverbindung, wobei das zweite Montageteil insbesondere eine erste Rastzunge und das Basisteil eine Rastausnehmung aufweist. Damit ergibt sich eine gewünschte sehr einfache Befestigung auch der zweiten Montageteile. Somit sind alle Montagearbeiten nach der Vormontage der Basisteile werkzeuglos und mit nur zwei Typen von Montageteilen möglich bzw. inklusive des Basisteils müssen nur drei Teile im Lager gehalten und auf die Baustelle geschafft werden.

Weiter bevorzugt ist, dass die Montageanordnung auch Windbleche umfasst, und dass die Windbleche und die ersten Montageteile Befestigungsmittel aufweisen, welche zur Befestigung eines Windblechs an mindestens zwei ersten Montageteilen sowohl in deren erster Montageposition als auch in deren zweiter Montageposition ausgestaltet sind. Insbesondere so, dass die Befestigungsmittel zur werkzeuglosen Befestigung des Windblechs in jeder der beiden Montagepositionen ausgestaltet sind. Damit wird die Montageanordnung weiter vereinfacht, da eine einzige Form von Windblech verwendbar ist. Somit sind alle Montagearbeiten mit nur vier Teilen möglich, nämlich mit den vorgenannten drei Teilen und dem Windblech.

Weiter ist es bevorzugt, wenn auch die Befestigung der plattenförmigen Elemente an den Montageteilen einfach möglich ist, wobei dies insbesondere dadurch erfolgt, dass die Montageanordnung weiter Montageklammern umfasst, welche zur Befestigung des plattenförmigen Elements am ersten Montageteil ausgestaltet sind, wobei das erste Montageteil sowohl in seiner ersten Montageposition als auch in seiner zweiten Montageposition jeweils mindestens ein Befestigungselement zur Aufnahme der Montageklammer aufweist und bereitstellt.

Wie erwähnt, kann die Montageanordnung auch so ausgeführt sein, dass das erste Montageteil und/oder das zweite Montageteil zur direkten Befestigung an der Fläche ausgestaltet sind. Damit entfällt das Basisteil und die Montageteile werden direkt an der Fläche befestigt, insbesondere durch Beschwerung mit Gewichtsmodulen. Auch dabei ergibt sich der Vorteil, dass das erste Montageteil für die gewünschten verschiedenen Neigungen dasselbe Teil ist und auch das zweite Montageteil für beide Neigungen geeignet ist.

Bevorzugt ist, dass die ersten Montageteile jeweils von einem Abschnitt eines Metallprofils, insbesondere von einem Abschnitt eines Aluminiumprofils gebildet sind. Weiter ist bevorzugt, dass die zweiten Montageteile jeweils von einem Abschnitt eines Metallprofils, insbesondere von einem Abschnitt eines Aluminiumprofils gebildet sind. Für beide Montageteile können auch andere Materialien eingesetzt werden, insbesondere Kunststoffe. Die Verwendung von stranggepressten Teilen oder extrudierten Teilen erlaubt eine besonders einfache und kostengünstige Herstellung der für die genannten Funktionen geformten Montageteile.

Weiter liegt der Erfindung die Aufgabe zu Grunde, eine einfach und kostengünstig erstellbare Solarenergieanordnung bereit zu stellen.

Diese Aufgabe wird mit der Solarenergieanordnung gemäss Anspruch 14 gelöst.

Diese weist die vorgenannten Vorteile ebenfalls auf.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Figur 1 eine Seitenansicht eines ersten Montageteils in seiner ersten Montageposition A und ein zweites Montagteil;
Figur 2 eine Seitenansicht eines Basisteils;
Figur 3 eine Draufsicht auf das Basisteil von Figur 2 mit der an diesem Basisteil angedeutet gezeigten Unterseite eines Montageteils in Position A und mit der an diesem Basisteil angedeutet gezeigten Unterseite eines zweiten Montageteils;
Figur 4 eine Seitenansicht des ersten Montageteils in seiner zweiten Montageposition B und das zweite Montageteil;
Figur 5 eine Draufsicht auf ein Basisteil mit an diesem Basisteil bereits befestigten, ersten Montageteil in Position B und am Basisteil befestigten zweitem Montageteil;
Figur 6 eine Draufsicht auf zwei Basisteile mit ersten und zweiten Montageteilen und mit einem nur angedeuteten plattenförmigen Element;
Figur 7 eine Montageklammer in Seitenansicht;
Figur 8 eine Ansicht der Montageklammer von Figur 7 von deren anderen Seite und ein entsprechendes Befestigungselement eines Montageteils; und
Figuren 9 bis 20 Seitenansichten auf Solaranordnungen mit beispielsgemässen Montageanordnungen und gegebenenfalls mit einem Windblech, sowie Draufsichten auf die Basisteile.

### Weg(e) zur Ausführung der Erfindung

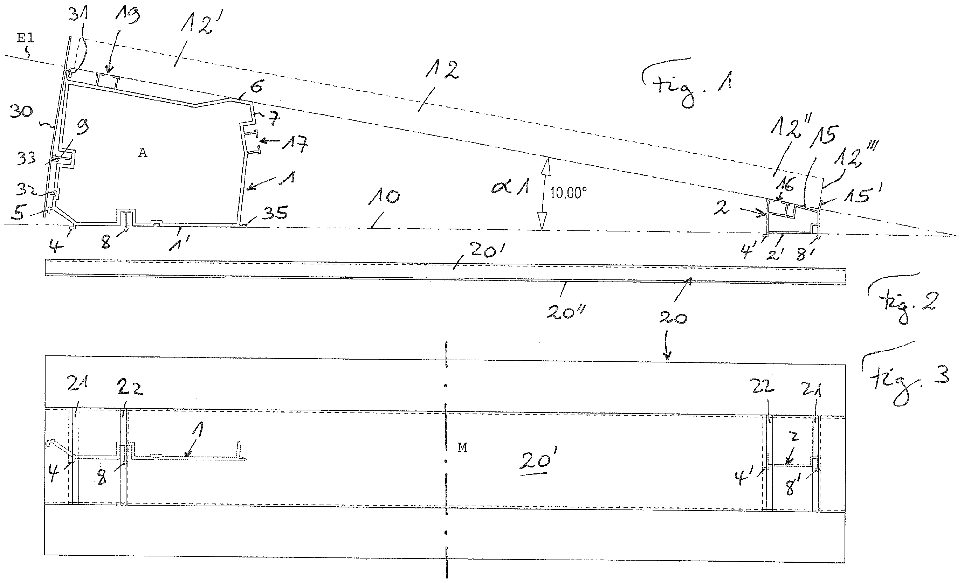

An Hand der Figuren 1 bis 6 wird ein erstes bevorzugtes Ausführungsbeispiel einer Montageanordnung gezeigt, welche neben ersten Montageteilen noch zusätzlich zweite Montageteile und Basisteile aufweist. Wie vorstehend erläutert, kann ein demgegenüber vereinfachtes Beispiel der Erfindung nur die ersten Montageteile aufweisen, welche in diesem Fall ohne Basisteil direkt auf der Fläche in der jeweils gewünschten Montageposition A oder B befestigt werden. Die Fläche kann insbesondere eine horizontale Gebäudefläche sein, kann aber auch eine Rasenfläche oder kann eine Fläche auf Fahrnisbauten oder auf Wohnwagen sein. Oder die Fläche kann eine Fassadenfläche sein. Die Befestigung auf einer horizontalen Gebäudefläche erfolgt insbesondere durch Beschwerung mit Gewichtselementen oder kann auch mit Schrauben erfolgen. Auch auf die bevorzugten zweiten Montageteile kann verzichtet werden. Das plattenförmige Element liegt dann mit seinem unteren Endbereich direkt auf der Fläche bzw. Gebäudefläche auf. In der vorliegenden Anmeldung ist mit "unten" und "oben" bzw. "unterhalb" und "oberhalb" jeweils die relative Lage gemäss den Seitenansichten in den Figuren gemeint, wobei "unten" bei der Fläche bzw. Gebäudefläche liegt und "oben" in vertikaler entgegengesetzter Richtung liegt. Bei der Befestigung an einer Fassade ergeben sich entsprechend andere Lagebezeichnungen für den weiter von der Fassade entfernten Teil des plattenförmigen Elements bzw. den näher an der Fassade liegenden Teil des plattenförmigen Elements.

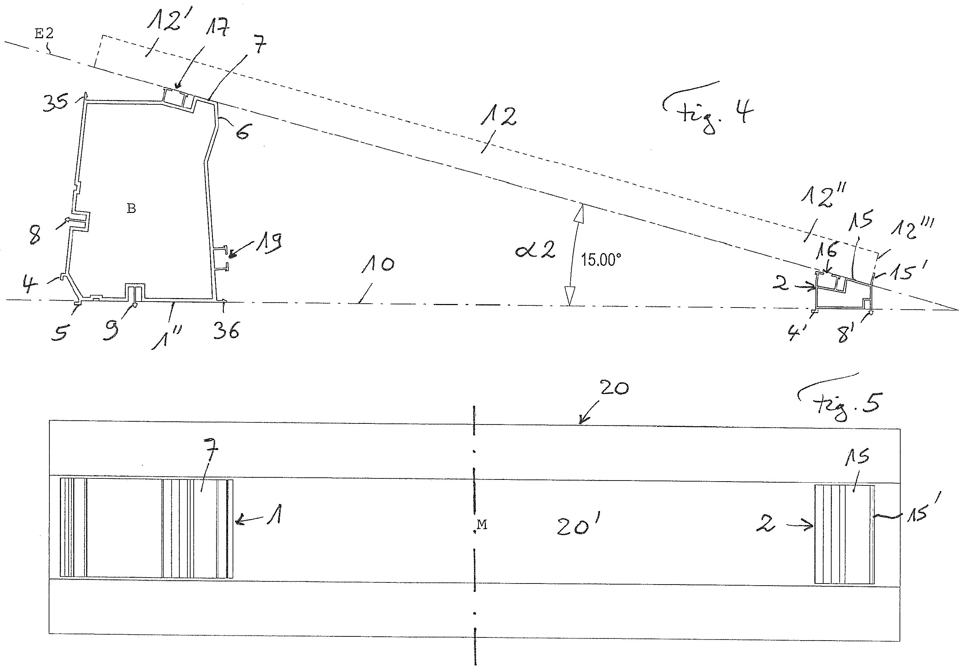

Figur 1 zeigt das erste Montageteil 1 in Montageposition A und Figur 4 zeigt dasselbe Montageteil 1 in Montageposition B. Das Montageteil 1 ist vorzugsweise ein Abschnitt eines Strangpressprofils aus Aluminium, welches Profil alle notwendigen bzw. bevorzugten Flächen und Befestigungselemente ausbildet. Dies vereinfacht die Herstellung der Montageteile 1. Ein solches Montageteil könnte indes auch aus mehreren Teilen zusammengebaut sein, was hier nicht weiter erläutert wird. Anstelle eines Strangpressprofils aus Metall könnte auch ein extrudiertes Profil aus Kunststoff vorgesehen sein oder ein Montageteil aus einem anderen Material.

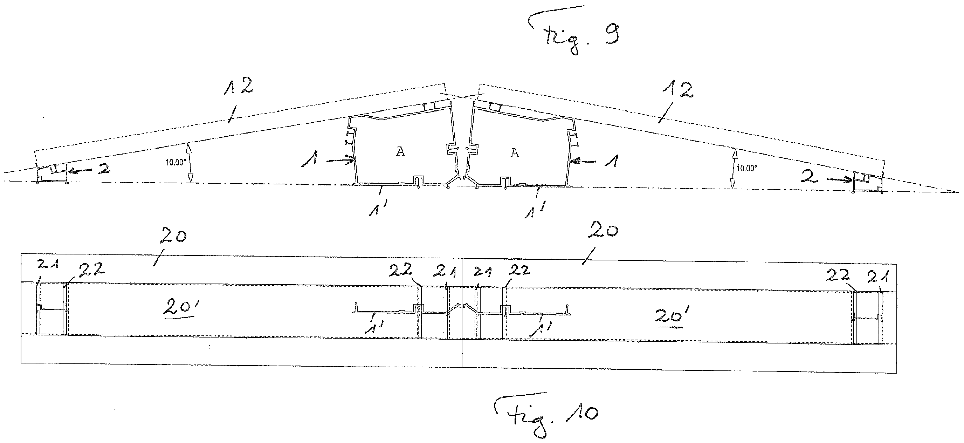

In den Figuren 1 und 4 sowie auch in den Figuren 9 bis 20 deutet eine unterbrochene Linie 10 den in der Regel horizontalen Verlauf einer nicht dargestellten Fläche, insbesondere einer Gebäudefläche, zum Beispiel der Oberseite eines Flachdaches, an. Da in dem hier erläuterten Beispiel ein Basisteil 20 verwendet wird, welches mit seiner Unterseite zu der Gebäudefläche hin positioniert und an dieser befestigt ist, insbesondere mit Gewichten fixiert bzw. befestigt ist oder angeschraubt ist, liegt die Fläche bzw. Gebäudefläche unterhalb der Linie 10, verläuft aber in derselben horizontalen Richtung. Natürlich kann die Fläche auch eine Neigung aufweisen, was hier aber nicht weiter betrachtet wird.

Das Montageteil 1 ist so ausgebildet, dass, wenn es in der Montageposition A von Figur 1 an bzw. auf der Fläche befestigt ist (hier indirekt über das Basisteil 20) eine erste Auflagefläche 6 für ein hier nur mit unterbrochener Linie angedeutetes plattenförmiges Element 12 bereitstellt. (Ein solches plattenförmiges Element kann ein Photovoltaikmodul zur Stromerzeugung oder ein Solarenergiemodul zur Erwärmung einer Flüssigkeit sein. Das Montageteil 1 weist eine zweite Auflagefläche 7 für das plattenförmige Element 12 auf, welche in der Figur 1 bzw. in der Montageposition A unterhalb der ersten Auflagefläche 6 und somit näher bei der Fläche liegt. In der Montageposition A spielt die Auflagefläche 7 funktionell keine Rolle. In der Montageposition B von Figur 4 ist hingegen das Montageteil so an der Fläche bzw. in diesem Beispiel am Basisteil 20 befestigt, dass die Auflagefläche 7 oberhalb der Auflagefläche 6 liegt und die funktional relevante Auflagefläche bildet und die Auflagefläche 6 nun unterhalb der Auflagefläche 7 liegt und keine Funktion für die Auflage des plattenförmigen Elements 12 hat. Die jeweils oben liegende Auflagefläche 6 (Figur 1) bzw. 7 (Figur 4) definiert geometrisch mit ihrer Fläche eine Ebene E1 bzw. eine Ebene E2. Gemäss der Erfindung ist die Anordnung der Auflageflächen 6 bzw. 7 am Montageteil 1 derart, dass diese Ebenen bei dem jeweils bestimmungsgemäss an der Fläche befestigtem Montageteil 1 die Fläche unter einem unterschiedlichen Winkel schneiden bzw. die Ebene, die von der jeweiligen Unterseite 1' oder 1" des Montageelements je nach Montagesituation A oder B gebildet wird, unter dem unterschiedlichen Winkel schneiden. Damit wird erreicht, dass das auf den Auflageflächen aufliegende plattenförmige Element je nach Montageposition A oder B in einem unterschiedlichen Winkel zur Fläche bzw. Gebäudefläche geneigt ist. Mit anderen Worten, je nach Montageposition des Montageteils 1 kann auf der Baustelle die Neigung in die eine oder die andere der beiden gewünschten Neigungen liegend gewählt werden. Und dies mit demselben Montageelement 1, nur durch Wahl von dessen Montageposition A oder B.

In Figur 1 ist dargestellt, dass die Ebene E1, welche von der Auflagefläche 6 aufgespannt wird, die mit der Linie 10 dargestellte Horizontalebene und damit auch die Fläche, bzw. die von der Unterseite 1' des Montageteils 1 definierte Ebene, unter dem Winkel α1 schneidet, der hier als Beispiel mit 10 Grad gewählt ist. Dies entspricht einer Neigung des plattenförmigen Elements von 10°, was in der Schweiz eine häufig gewählte Neigung ist. In Figur 4 ist dargestellt, dass die Ebene E2, welche von der Auflagefläche 7 aufgespannt wird, die mit der Linie 10 gezeigte Horizontalebene und damit auch die Fläche, bzw. die von der Unterseite 1" des Montageteils definierte Ebene, unter dem Winkel α2 schneidet, der hier als Beispiel mit 15 Grad gewählt ist. Dies entspricht einer Neigung des plattenförmigen Elements von 15°, was in der Schweiz eine weitere häufig gewählte Neigung ist.

In dem gezeigten Beispiel ist ein zweites Montageteil 2 vorgesehen, welches eine Auflage für den näher bei der Fläche und damit unten liegenden Endbereich 12" des plattenförmigen Elements 12 bildet. Der infolge der Neigung oberhalb liegende Endbereich 12' liegt auf der Auflagefläche 6 oder 7 auf, wie erläutert. Der untere Endbereich 12" des plattenförmigen Elements kann auf einer im Wesentlichen linienförmigen Auflage aufliegen, welche für beide Neigungen des plattenförmigen Elements geeignet ist. Bevorzugt weist das zweite Montageteil hingegen zwei Auflageflächen auf, die bei befestigtem Montageteil 2 jeweils in unterschiedlichen Winkeln zur Fläche liegen bzw. in unterschiedlichen Winkeln zur Unterseite 2' des zweiten Montageteils 2 liegen. In der Regel werden diese Winkel so ausgestaltet sein, dass das plattenförmige Element bei einer Neigung mit dem Winkel α1 im Wesentlichen an der einen Auflagefläche aufliegt und bei einer Neigung mit dem Winkel α2 im Wesentlichen auf der anderen der beiden Auflageflächen des zweiten Montageteils aufliegt. Im gezeigten Beispiel ist die Auflagefläche 16, die hier von zwei Teilflächen gebildet wird im Wesentlichen für die Auflage durch das plattenförmige Element mit der Neigung von α1 bzw. 10° angeordnet und die Auflagefläche 15 für die Auflage des plattenförmigen Elements ist im Winkel α2 bzw. mit 15° angeordnet. Bevorzugt weist das Montageteil 2 zudem eine von der einen Auflagefläche 15 wegragende Anlage 15' auf, an welche sich die untere Kante 12"' des plattenförmigen Elements anlegen kann, wie zum Beispiel in den Figuren 1 und 4 ersichtlich.

Wie erwähnt, weist das bevorzugte Ausführungsbeispiel ein Basiselement 20 auf, an welchem die Montageteile 1 und 2 befestigt werden können. Dies erfolgt vorzugsweise werkzeuglos, so dass, nachdem die Basisteile auf der Fläche befestigt worden sind, vorzugsweise durch Beschwerung der Basisteile mit Gewichtselementen, für die Befestigung der Montageteile 1 und 2 keine Werkzeuge und Schrauben benötigt werden. Bevorzugt ist ferner jeweils ein Basisteil 20 vorgesehen, welches für ein erstes Montageteil 1 und ein zweites Montageteil 2 gemeinsam ist. Bevorzugt ist das Basisteil jeweils ein im Wesentlichen flaches, langgestrecktes Teil, insbesondere ebenfalls ein Aluminiumprofil, das mit seinen vorgegebenen Befestigungspositionen die Lage und den Abstand der Montageteile 1 und 2 vorgibt, abgesehen von der Wahlfreiheit für die Montageposition A oder B des Montageteils 1. Für die Anordnung eines Photovoltaikmoduls 12 auf den Auflageflächen der Montageteile 1 und 2 kann das Basisteil zum Beispiel eine Länge von ca. einem Meter aufweisen. Die vorgegebenen Montagepositionen sind vorzugsweise symmetrisch zur Mittelquerachse M des Basisteils 20 angeordnet, so dass bei der Befestigung des Basisteils an der Fläche nicht unterschieden werden muss, welcher Endbereich des Basisteils für die Befestigung eines Montageteils 1 bzw. für die Befestigung eines Montageteils 2 dient. Dies ermöglicht also, die Basisteile 20 in einem vorgesehenen Rastermass für die Solarmodule an der Fläche anzubringen und damit sind bereits alle Montagestellen für die Montageteile 1 und 2 gegeben, so dass bei deren Befestigung an dem Basisteil nur noch darauf geachtet werden muss, dass das Montageteil 1 in der der gewünschten Neigung des plattenförmigen Elements 12 entsprechenden Montageposition A oder B an der gewünschten Stelle am Basisteil befestigt wird.

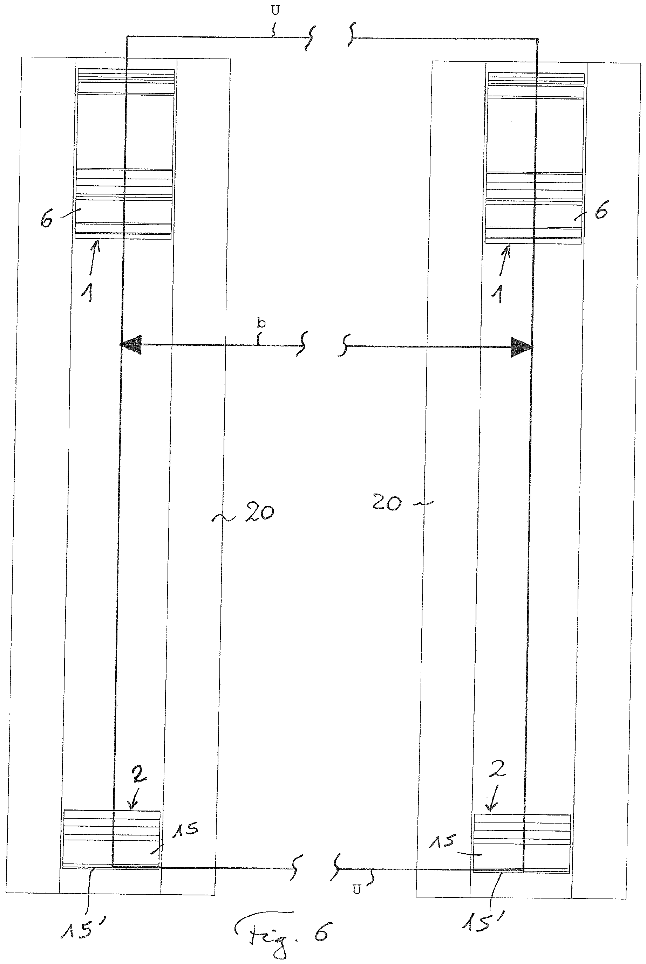

Figur 6 zeigt zur Erläuterung eine Draufsicht auf ein plattenförmiges Element 12 bzw. ein Solarmodul, wobei dies nur mit einer Umrisslinie U angedeutet und "durchsichtig" dargestellt ist, so dass die unter dem Solarmodul liegenden Basisteile 20 und Montageteile 1 bzw. 2 sichtbar sind. Das Solarmodul ist quer zu seiner Neigung mit seiner Breite b nur teilweise dargestellt, was durch die unterbrochene Umrisslinie U und den unterbrochenen Pfeil für die Breite b angedeutet ist. Es ist somit ersichtlich, dass das plattenförmige Element 12 nur seitlich jeweils an Montageteilen 1 und 2 aufliegt. Dabei liegt das plattenförmige Element in der Regel - und wie dargestellt - nur bis zur Hälfte der Breite der Auflageflächen 6 bzw. 7 und 15 bzw. 16 auf den Montageteilen 1 bzw. 2 auf, so dass diese jeweils auch für ein benachbartes plattenförmiges Element 12 als Auflage dienen. Am Anfang und Ende einer Reihe mehrerer derart nebeneinander liegender Elemente 12 können diese auch auf der ganzen Auflagefläche 6 bzw. 7 und 15 bzw. 16 aufliegen. Es könnten weitere Basisteile und Montageteile zwischen den dargestellten beiden Basisteilen bzw. zwischen den vier Montageteilen vorhanden sein, wenn dies für die Grösse oder das Gewicht des plattenförmigen Elements 12 erforderlich ist. Grundsätzlich könnte sich das erste Montageteil 1 und/oder das zweite Montageteil 2 auch über die ganze (zur Neigung quer liegende Breite b) des Solarmoduls erstrecken, doch ist dies für die sichere Anordnung des Solarmoduls nicht nötig und aus Gründen der Materialersparnis nicht vorteilhaft.

Die Figur 5 zeigt eine Draufsicht auf die beiden Montageteile 1 und 2 und ihr gemeinsames Basisteil 20, an welchem sie befestigt sind.

Bevorzugt erfolgt die Befestigung wenigstens der ersten Montageteile 1, bevorzugt aber beider Montageteile 1 und 2, an den Basisteilen 20 werkzeuglos. Es könnte zum Beispiel eine Formschlussverbindung mit einer Klebefläche kombiniert sein, um dies auszuführen. Bevorzugt ist eine "Click-Verbindung" ausgeführt, die ein einfaches Einrasten bzw. Einklicken des jeweiligen Montageteils zu dessen Befestigung am Basisteil ermöglicht. Dies kann ebenfalls an Hand der Figuren 1 bis 5 gezeigt werden.

Figur 1 stellt die bereits erläuterte Montageposition A des Montageteils 1 dar. In dieser Figur ist das plattenförmige Element 12, zum Beispiel ein Photovoltaikelement, aufliegend auf den Montageteilen 1 und 2 mit unterbrochenen Linien angedeutet. In der Montageposition A liegt das Element 12 auf der Auflagefläche 6 auf und auf der Auflagefläche 16 bzw. den beiden Teilflächen 16.

An der in dieser Montageposition A zu dem Basisteil 20 weisenden Unterseite 1' des Montageteils 1 (welche im Wesentlichen parallel zur Fläche bzw. Gebäudefläche verläuft) weist das Montageteil 1 bevorzugt einerseits ein Formschlussmittel 4 zum Eingriff in das Basisteil 20 und andererseits ein Rastmittel 8 zum Eingriff in das Basisteil 20 auf. In den Figuren 1 und 3 ist ersichtlich, dass das Formschlussmittel 4 in diesem Beispiel eine unterseitig am Montageteil 1 vorspringende Nase ist, die in ein korrespondierendes Formschlussmittel 21 am Basisteil 20 eingreift. Figur 3 zeigt dabei zur Erläuterung den angedeuteten unteren Bereich des Montageteils 1 über dem Basisteil 20, um dies ersichtlich zu machen. Wird das Montageteil 1 in einer etwas schrägen Lage über dem Basisteil gehalten, kann die Nase 4 in das in diesem Beispiel als quer verlaufende Ausnehmung ausgebildete Formschlussmittel 21 des Basisteils eingreifen. Damit sind die Teile 1 und 20 im Formschluss (dies einerseits in Längsrichtung des Basisteils in der Richtung, die von der Mittelquerachse weg gerichtet ist und andererseits in der Achse M, da die Nase 4 im Wesentlichen die ganze Ausnehmung 21 bis zu deren Stirnseiten ausfüllt). Wird das Montageteil dann aus dieser schrägen Lage gegen das Basisteil 20 in die Montageposition A gedreht bzw. so gedreht, dass die Unterseite 1' des Montageteils 1 parallel zur Oberseite des Basisteils 20 zu liegen kommt, so greift das am Montageteil unterseitig vorstehende Rastmittel 8, in diesem Beispiel eine Rastzunge, in die Rastausnehmung 22 des Basisteils ein. Bevorzugt ist diese ebenfalls eine quer verlaufende Ausnehmung. Damit Platz für diese bevorzugte Ausführung des Formschlusses und für die Rastmittel bleibt, wenn das Basisteil an der Fläche bzw. Gebäudefläche anliegend befestigt ist, weist das Basisteil einen gegenüber seiner Unterseite 20" erhöhten Mittelteil 20' auf, in dem die Ausnehmungen 21 und 22 vorgesehen sind, was in Figur 2 und 3 ersichtlich ist, welche das Basisteil in Seitenansicht und Draufsicht zeigen. Auch in den Figuren 9 bis 20 ist zeichnerisch angedeutet, wie die Formschlussmittel 4 und 21 und die Rastmittel 8 und 22 ineinandergreifen. Damit ist das Montageteil werkzeuglos am Basisteil befestigt und zwar in der Montageposition A.

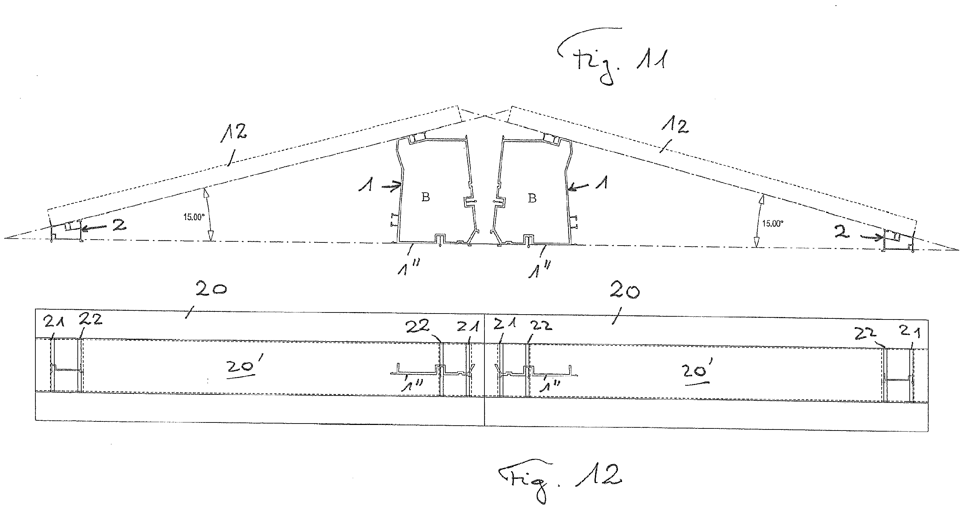

Für die Befestigung in der Montageposition B sind am Basisteil 20 bevorzugt dieselben Formschlussmittel und Rastmittel bzw. die quer verlaufenden Ausnehmungen 21 und 22 vorgesehen. Hingegen wird das Profil des Montageteils 1 nun so angeordnet, dass dessen Formschlussmittel 5, bzw. diese Nase, in die Ausnehmung 21 eingreift und das Rastmittel 9 bzw. diese Rastzunge in die Ausnehmung 22 eingreift. Die Nase und die Rastzunge ragen über die Unterseite 1" des Montageteils hinaus, welches in der Montageposition B die dem Basisteil 20 gegenüberliegende Unterseite des Montageteils ist. Damit ergibt sich eine Befestigung des ersten Montageteils 1 in der Montageposition B, wie in Figur 4 dargestellt. Zum Beispiel in Figur 11 ist zeichnerisch angedeutet, wie in diesem Fall der Montageposition B die Befestigungsmittel bzw. die Formschlussmittel und die Rastmittel ineinander eingreifen.

Für die "Click-Befestigung" des zweiten Montageteils 2 am Basisteil sind vorzugsweise ebenfalls Formschlussmittel und Rastmittel vorgesehen. Wie in Figur 1 gezeigt, ist als Formschlussmittel 4' zum Beispiel eine Nase vorgesehen, welche ebenfalls in eine Ausnehmung am Basisteil 20, insbesondere am Teil 20' eingreift, die hier eine weitere Ausnehmung 22 ist. Als Rastmittel 8' kann eine Rastzunge vorgesehen sein, die in eine Ausnehmung 21 am Basisteil 20, insbesondere am Teil 20' eingreift. Die Befestigung des Montageteils 2 erfolgt somit bevorzugt auf grundsätzlich dieselbe Weise wie die Befestigung des Montageteils 1, wobei es für das Montageteil 2 aber nur eine Position gibt, in welcher es befestigt wird. Bevorzugt sind Ausnehmungen 21 und 22 am Basisteil an beiden Enden symmetrisch zur Mittelquerachse M des Basisteils angeordnet, so dass an beiden Enden des Basisteils 20 jeweils ein Montageteil 1 oder ein Montageteil 2 befestigbar ist.

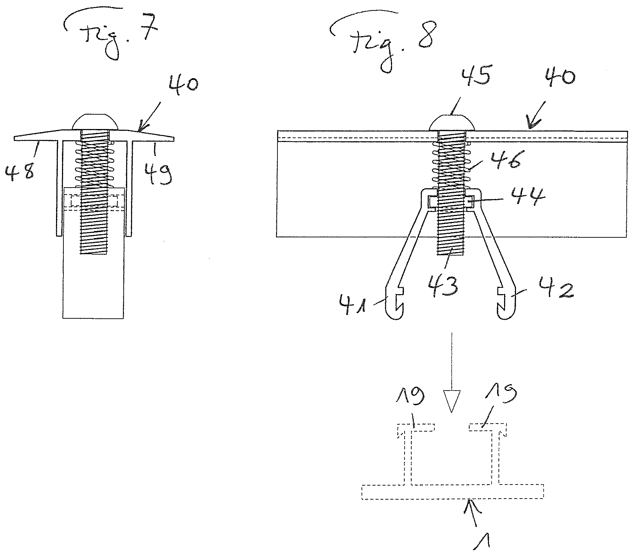

Die Befestigung des plattenförmigen Elements 12 am jeweiligen Montageteil 1 und 2 erfolgt zum Beispiel durch eine Schraubbefestigung mit separaten Schrauben. Bevorzugt ist indes eine Befestigung mit einer in Figur 7 und 8 gezeigten Montageklammer vorgesehen. In einer solchen bevorzugten Ausführung sind mindestens die Montageteile 1 und vorzugsweise auch die Montageteile 2 mit entsprechenden Halteteilen für die Klammern versehen. In Figur 1 ist ersichtlich, dass im Falle der Montageposition A die Halteteile 19 des Montageteils 1 so zu liegen kommen, dass sie sich derart unterhalb der Ebene E1 befinden, dass von oben her eine Montageklammer 40 mit den Halteteilen 19 in Eingriff gebracht werden kann. In Figur 8 sind diese Halteteile 19 des Montageteils 1 unterhalb der Montageklammer 40 angedeutet. In Figur 4 ist ersichtlich, dass in der Montageposition B des Montageteils 1 die Halteelemente 17 direkt unterhalb der Ebene E2 liegen und somit eine Montageklammer 40 von oben in Eingriff daran gebracht werden kann. In Figur 8 wäre für diese Montageposition das Halteteil 17 dargestellt anstelle des Halteteils 19. Für das Montageteil 2 sind in diesem Beispiel die Teilebenen der Auflageebene 16 so angeordnet, dass daran eine Montageklammer 40 angreifen kann. Aus den Figuren 7 und 8 ist ersichtlich, dass die Montageklammer 40 Klammerteile 41 und 42 aufweist, die, sich aufspreizend und zurückfedernd, an den Haltemitteln 16, 17 und 19 in Eingriff bringbar sind. Klemmflächen 48 und 49 der Montageklammer 40 beaufschlagen dann in der Regel zwei benachbarte plattenförmige Elemente an deren Rändern, wenn die Montageklammern 40 zwischen zwei benachbarten plattenförmigen Elementen 12 an den Haltemitteln der Montageteile 1 und 2 in Eingriff gebracht werden. Die Montageklammer 40 weist ein Innengewinde auf, welches zum Beispiel in einem Teil 44 der Montageklammer vorgesehen sein kann. In das Innengewinde 44 greift ein Gewindebolzen 43 ein, der mittels eines Werkzeugeingriffs 45 an seiner Oberseite gedreht werden kann, womit dann das plattenförmige Element 12 gegenüber den Montageteilen 1 bzw. 2 eingespannt wird. Bevorzugt ist eine Feder 46 vorgesehen, welche die Montagearbeit erleichtert.

Zum Beispiel an Hand der Figur 1 kann eine weitere bevorzugte Ausführung erläutert werden, bei welcher ein Windblech 30 verhindert, dass unterhalb des plattenförmigen Elements 12 Wind eintritt. Das Windblech 30 erstreckt sich über die ganze Breite b des Elements 12 parallel zu dessen oberer Stirnfläche. Ein Windblech kann sich auch über mehrere nebeneinander angeordnete Elemente 12 erstrecken. Bevorzugt ist, dass das Montageteil 1 in beiden Montagepositionen A und B Befestigungsteile für das Windblech bereitstellt. Insbesondere soll auch hier eine "Click-Verbindung" ermöglicht werden. Wie in den Figuren 1 und 4 sowie 13, 15, 17 und 19 ersichtlich stellt das Montageteil 1 jeweils an seiner Oberseite eine hakenartige Nase 36 (Montageposition A) bzw. 35 (Montageposition B) zur Verfügung, an welcher das Windblech 30 mit einem korrespondierenden Hakenteil 31 in Formschlussverbindung bringbar ist. Für die Rastverbindung wird bevorzugt seitens des Montageteils 1 das in der jeweiligen Montageposition A bzw. B nicht zur Einrastung am Basisteil 20 benötigte Rastmittel 9 (Montageposition A) bzw. das Rastmittel 8 (Montageposition B) zur Rastverbindung des Windblechs verwendet. Das Windblech 30 weist dazu korrespondierende Rastmittel 33 auf, die in der Montageposition A am Rastmittel 9 des Montageteils 1 angreifen bzw. es weist korrespondierende Rastmittel 32 auf, die in der Montageposition B des Montageteils 1 an dessen Rastmittel 8 angreifen. Das Windblech ist vorzugsweise auch ein Strangpressprofil aus Aluminium, das die entsprechenden Elemente einstückig ausbildet. Auch ein entsprechend extrudiertes windhemmendes Teil aus Kunststoff oder ein Windblech aus einem anderen Metall als Aluminium kann vorgesehen werden.

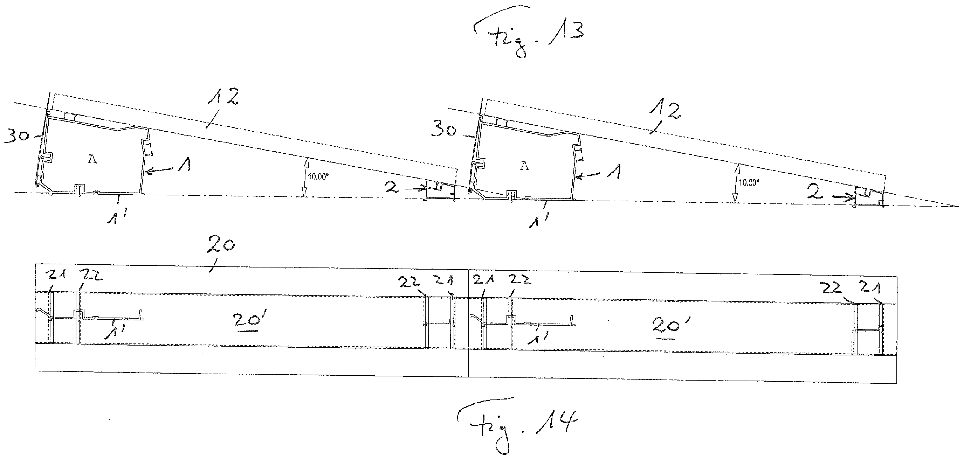

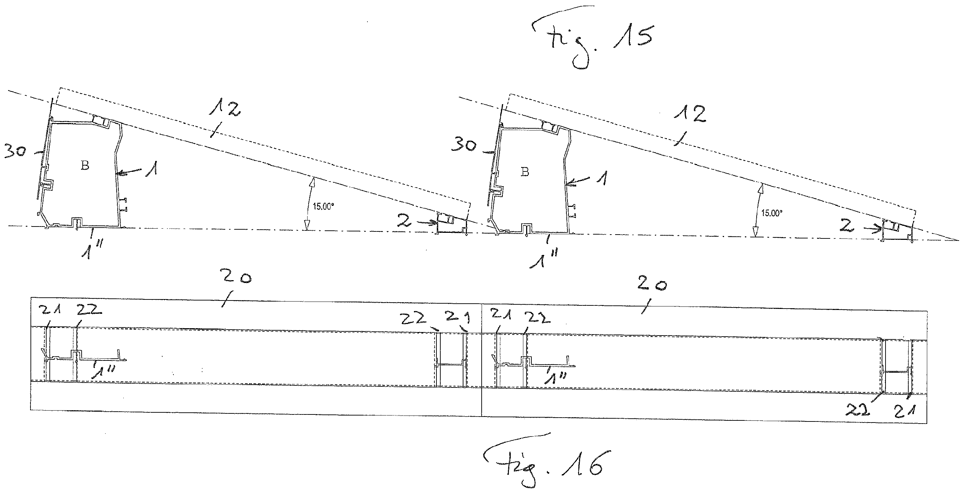

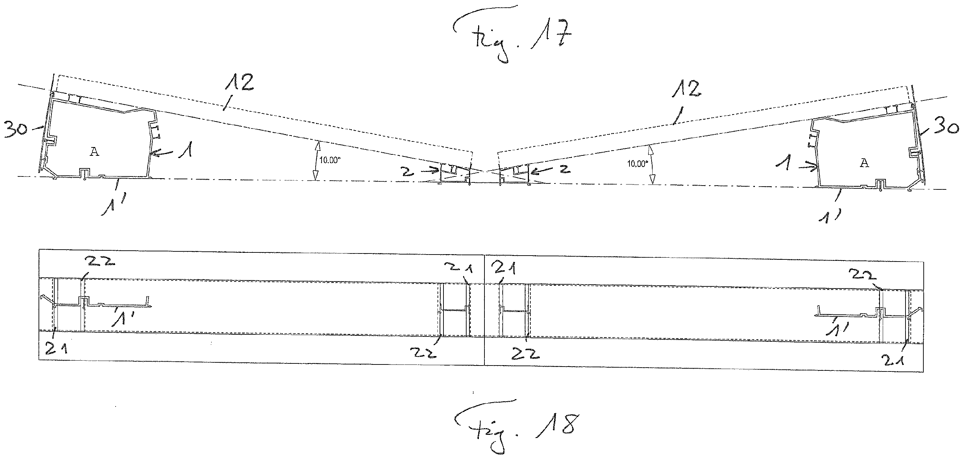

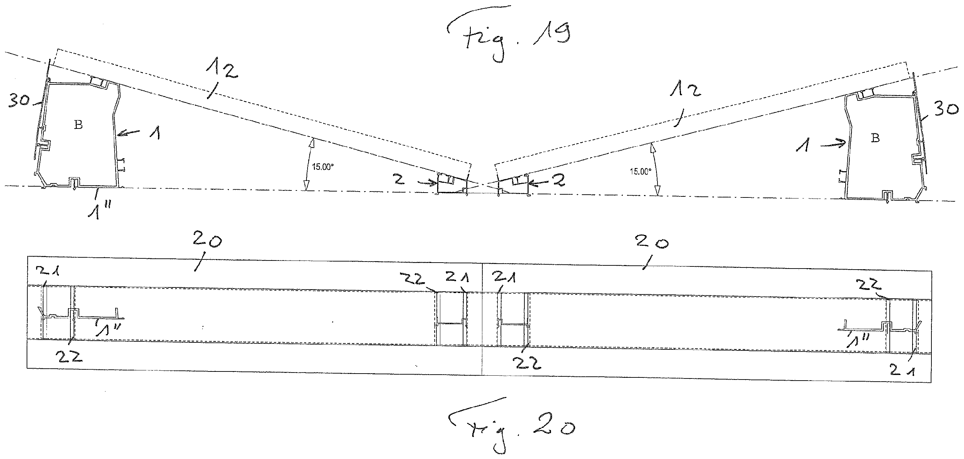

Die Figuren 9 bis 20 zeigen, dass mit der Montageanordnung gemäss der Erfindung alle dargestellten Montagearten für plattenförmige Elemente 12 auf einfache Weise bewirkt werden können. Figur 9 zeigt die Anordnung in der Art eines Satteldachs. Ersichtlich ist, dass die Basisteile 20 bevorzugt so ausgestaltet sind, dass sie direkt aneinander liegend und fluchtend an der Fläche befestigt werden können, womit auch der gewünschte Abstand der beiden Elemente 12 voneinander gegeben ist. Dies ist auch bei den weiteren Beispielen ersichtlich. Eine einzige Art der Montage bzw. der Befestigung der Basisteile erlaubt also bei dieser bevorzugten Ausführung alle Montagevarianten für die Elemente 12. In Figur 10 sind die Basisteile 20 in Draufsicht gezeigt. Es ist ersichtlich, dass die Basisteile 20 miteinander in einer Linie liegend bzw. fluchtend angeordnet sind und mit jeweils einer Schmalseite aneinander angrenzen. In Figur 10 ist ebenfalls zeichnerisch angedeutet, wie die Montageteile 1 bzw. 2 am jeweiligen Basisteil befestigt sind. Die Figuren 11 und 12 zeigen, dass mit derselben Anordnung der Basisteile und der zweiten Montageteile 2 und der Wahl der Montageposition B der Montageteile 1 die steilere Neigung der plattenförmigen Elemente 12 realisierbar ist. Die Figuren 13 bis 16 zeigen, dass mit derselben Anordnung der Basisteile 20, wie zuvor bei den Figuren 9 bis 12, und somit nur durch Änderung der Lage der Montageteile 1 und 2 eine Ausrichtung der plattenförmigen Elemente 12 in der Art eines Sheddachs erzielbar ist. Figuren 13 und 15 zeigen, dass auch bei dieser sheddach-förmigen Konfiguration die jeweilig gewünschte Neigung des plattenförmigen Elements 12 lediglich durch Wahl der Montageposition A oder B des Montageteils 1 wählbar ist. Die Figuren 17 bis 20 zeigen, dass auch eine rinnenförmige Konfiguration mit derselben Anordnung der Basisteile einfach wählbar ist, hier mit der geringeren Neigung in Figur 17. Lediglich durch Wahl der anderen Montageposition B wird wiederum die grössere Neigung erzielt, wie in Figur 19 dargestellt.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Montageanordnung, die für die gegenüber einer Fläche geneigte Montage eines plattenförmigen Elements (12) an und oberhalb der Fläche ausgestaltet ist, **dadurch gekennzeichnet, dass** die Montageanordnung Montageteile (1) umfasst, welche zur direkten oder indirekten Befestigung an der Fläche in zwei verschiedenen Montagepositionen (A; B) ausgestaltet sind und eine erste Auflagefläche (6) und eine zweite Auflagefläche (7) aufweisen, die jeweils als Auflagefläche für den auf Grund der Neigung höher zu liegen kommenden Endbereich (12') des plattenförmigen Elements (12) bestimmt sind, dass die Auflageflächen (6, 7) jeweils derart an den Montageteilen (1) angeordnet sind, dass in der ersten Montageposition (A) der zwei wählbaren Montagepositionen, die erste Auflagefläche (6) oberhalb der zweiten Auflagefläche (7) zu liegen kommt und die durch die erste Auflagefläche (6) definierte Ebene (E1) die Fläche in einem ersten Winkel (α1) schneidet, und dass in der zweiten Montageposition (B) die zweite Auflagefläche (7) oberhalb der ersten Auflagefläche (6) zu liegen kommt und die durch die zweite Auflagefläche (7) definierte Ebene (E2) die Fläche in einem zweiten Winkel (α2) schneidet, der unterschiedlich zum ersten Winkel ist.

2. Montageanordnung nach Anspruch 1, **dadurch gekennzeichnet, dass** diese zur direkten Anordnung auf der Fläche bestimmte Basisteile (20) aufweist, und dass die Basisteile (20) und die Montageteile (1) zur werkzeuglosen Befestigung aneinander in beiden Montagepositionen des jeweiligen Montageteils ausgestaltet sind.

3. Montageanordnung nach Anspruch 2, **dadurch gekennzeichnet, dass** zur werkzeuglosen Befestigung des Montageteils (1) am Basisteil (20) an diesen jeweils erste starre zusammenwirkende Formschlussmittel (4, 21; 5, 21) sowie jeweils eine Rastverbindung vorgesehen sind, wobei das Montageteil (1) insbesondere ein erstes Rastmittel (8), insbesondere eine Rastzunge, und ein zweites Rastmittel (9), insbesondere eine Rastzunge, aufweist und das Basisteil (20) bevorzugt eine einzige für beide Rastmittel vorgesehene Rastausnehmung (22) aufweist.

4. Montageanordnung nach einem der Ansprüche 1 bis 3, **dadurch gekennzeichnet, dass** diese zweite Montageteile (2) umfasst, welche zur direkten oder indirekten Befestigung an der Fläche ausgestaltet und zur Bildung einer Auflage für den auf Grund der Neigung tiefer zu liegen kommenden Endbereich (12") des plattenförmigen Elements (12) bestimmt sind.

5. Montageanordnung nach Anspruch 4, **dadurch gekennzeichnet, dass** die zweiten Montageteile (2) jeweils zwei weitere Auflageflächen (15, 16) aufweisen, derart, dass diese bei dem an der Fläche befestigten zweiten Montageteil je einen unterschiedlichen Winkel mit der Fläche bilden, insbesondere jeweils den ersten Winkel (α1) bzw. den zweiten Winkel (α2) mit der Fläche bilden.

6. Montageanordnung nach Anspruch 2 und Anspruch 4 oder 5, **dadurch gekennzeichnet, dass** jeweils ein gemeinsames Basisteil (20) für ein erstes und ein zweites Montageteil (1, 2) vorgesehen ist, und insbesondere dass das Basisteil und das zweite Montageteil (2) zur werkzeuglosen Befestigung aneinander ausgestaltet sind.

7. Montageanordnung nach Anspruch 6, **dadurch gekennzeichnet, dass** das beiden Montageteilen gemeinsame Basisteil ein langgestrecktes Basisteil ist, das vorgegebene Befestigungspositionen (21, 22) für die Montageteile (1, 2) aufweist, und insbesondere, dass die Befestigungspositionen entlang der Längserstreckung symmetrisch zur Quermittelachse (M) des Basisteils angeordnet sind.

8. Montageanordnung nach Anspruch 6 oder 7, **dadurch gekennzeichnet, dass** zur werkzeuglosen Befestigung des zweiten Montageteils (2) am Basisteil (20) an diesen jeweils erste starre zusammenwirkende Formschlussmittel (4', 22) sowie jeweils eine Rastverbindung vorgesehen sind, wobei das zweite Montageteil (1) insbesondere ein erstes Rastmittel (8'), insbesondere eine erste Rastzunge und das Basisteil eine Rastausnehmung (21) aufweist.

9. Montageanordnung nach einem der Ansprüche 1 bis 8, **dadurch gekennzeichnet, dass** diese weiter mindestens ein Windblech (30) umfasst, und dass das Windblech (30) und die ersten Montageteile (1) Befestigungsmittel aufweisen, welche zur Befestigung des Windblechs an ersten Montageteilen (1) sowohl in deren erster Montageposition (A) als auch in deren zweiter Montageposition (B) ausgestaltet sind, insbesondere **dadurch gekennzeichnet, dass** die Befestigungsmittel zur werkzeuglosen Befestigung des Windblechs in jeder der beiden Montagepositionen ausgestaltet sind, insbesondere jeweils zur werkzeuglosen Befestigung mittels einer Formschlussverbindung und einer Rastverbindung.

10. Montageanordnung nach einem der Ansprüche 1 bis 9, weiter umfassend Montageklammern (40), welche zur Befestigung von plattenförmigen Elementen an den ersten Montageteilen (1) ausgestaltet sind, wobei das erste Montageteil sowohl in seiner ersten Montageposition als auch in seiner zweiten Montageposition jeweils mindestens ein Befestigungselement (17, 19) zur Aufnahme von Montageklammern aufweist und bereitstellt.

11. Montageanordnung nach einem der Ansprüche 1 bis 10, **dadurch gekennzeichnet, dass** die ersten Montageteile und/oder die zweiten Montageteile zur direkten Befestigung an der Fläche ausgestaltet sind.

12. Montageanordnung nach einem der Ansprüche 1 bis 11, wobei die ersten Montageteile (1) jeweils von einem Abschnitt eines Metallprofils, insbesondere von einem Abschnitt eines Aluminiumprofils gebildet sind, oder wobei die ersten Montageteile aus einem nichtmetallischen Material gebildet sind.

13. Montageanordnung nach einem der Ansprüche 1 bis 12, wobei die zweiten Montageteile jeweils von einem Abschnitt eines Metallprofils, insbesondere von einem Abschnitt eines Aluminiumprofils gebildet sind, oder wobei die zweiten Montageteile aus einem nichtmetallischen Material gebildet sind.

14. Solarenergieanordnung mit mindestens einem plattenförmigen Solarenergieelement oder Photovoltaikelement (12), welches mit einer Montageanordnung nach einem der Ansprüche 1 bis 13 an einer Fläche (10), insbesondere einer Gebäudefläche befestigt ist.

15. Solarenergieanordnung nach Anspruch 14, **dadurch gekennzeichnet, dass** mehrere Solarenergieelemente oder Photovoltaikelemente vorgesehen sind, wobei jeweils zwei dieser Elemente einander satteldachförmig gegenüberliegend oder einander sheddach-förmig gegenüberliegend oder einander rinnenförmig gegenüberliegend angeordnet sind, und wobei eine Montageanordnung mit Basisteilen (20) vorgesehen ist und wobei jeweils zwei Basisteile so angeordnet sind, dass sie miteinander fluchtend und mit jeweils einer Schmalseite aneinander angrenzend an der Fläche befestigt sind.
